# DEMANDE DE BREVET EUROPEEN

(11) **EP 0 607 074 A1**
(43) Date de publication de la demande: **20.07.1994**
(21) Numéro de dépôt: 94400051.2
(22) Date de dépôt: 10.01.1994
(51) Int. Cl.: C04B 24/26

(54) **Compositions pour ciment comprenant un latex alcaligonflant et ciments obtenus à partir de ces compositions**

(30) Priorité: 13.01.1993 FR 9300228
(71) Demandeur: RHONE-POULENC CHIMIE, 92408 Courbevoie Cédex (FR)
(72) Inventeur: Bortzmeyer, Denis, F-94300 Vincennes (FR); Frouin, Laurent, F-94240 l'Hay Les Roses (FR); Reeb, Roland, F-77410 Gressy (FR)
(74) Mandataire: Dubruc, Philippe

(57) **Abrégé**

La présente invention concerne des compositions pour ciment comprenant un latex alcaligonflant et des ciments obtenus à partir de ces compositions.

Ces compositions sont caractérisées en ce qu'elles comprennent :
- un ciment ;
- un latex alcaligonflant.

Le ciment peut être du type silicate, plus particulièrement du type Portland.

Le latex alcaligonflant est généralement à base de polymères renfermant un ou plusieurs acides carboxyliques à insaturation éthylénique copolymérisés ou des esters alkyliques de ces acides.

## Description

La présente invention concerne des compositions pour ciment comprenant un latex alcaligonflant et des ciments obtenus à partir de ces compositions. Elle d'applique tout particulièrement aux ciments sans macro-défauts, appelés MDF (Macro Defect Free).

Les ciments MDF sont apparus il y a une dizaine d'années. Ces produits sont obtenus par mélanges de ciment, d'eau et de polymères. Ils possèdent des propriétés mécaniques très nettement améliorées par rapport aux ciments classiques notamment en ce qui concerne la résistance à la flexion. Toutefois, les ciments MDF présentent un inconvénient qui est leur grande sensibilité à l'eau, cette sensibilité étant due à une reprise d'eau importante quand ils sont immergés dans l'eau.

D'autre part et plus particulièrement dans le cas des ciments à base de silicate de calcium tels que les ciments du type Portland, l'utilisation de polymères comportant un taux important de groupes carboxyles, comme par exemple l'acide polyacrylique, peut poser des difficultés. En effet, la réticulation des groupes carboxyliques avec les ions calcium libérés lors de l'hydratation du ciment risque de se produire trop vite, provoquant une prise trop rapide et rendant difficile la mise en oeuvre.

On est donc amené dans ce cas à utiliser des polymères du type polyacrylamide dont les groupes amide s'hydrolysent progressivement du fait du pH basique de la pâte. Mais cette solution présente encore deux problèmes. D'une part, l'hydrolyse du polymère libère des quantités relativement importantes d'ammoniaque, ce qui est nuisible pour l'opérateur. D'autre part, le gaz ammoniac crée des bulles dans la pièce ce qui diminue sa densité et favorise la reprise d'eau lors du séjour de la pièce dans l'eau.

Un premier objet de l'invention est donc la mise au point de compositions pouvant conduire à des ciments de reprise d'eau plus faible et, de préférence, de densité plus élevée.

Un second objet de l'invention est de trouver des compositions ou des procédés de mise en oeuvre plus aisée et ne présentant pas ou réduisant notamment les inconvénients mentionnés plus haut au sujet du polyacrylamide.

Dans ce but, les compositions pour ciment selon l'invention sont caractérisées en ce qu'elles comprennent :
- un ciment ;
- un latex alcaligonflant.

Par ailleurs, l'invention concerne aussi un procédé de préparation d'un ciment qui est caractérisé en ce qu'il comprend une étape dans laquelle on mélange avec de l'eau un ciment et un latex alcaligonflant.

Selon un autre mode de réalisation, un procédé de l'invention pour la préparation d'un ciment est caractérisé en ce qu'on mélange les éléments constitutifs d'une composition du type décrit ci-dessus avec de l'eau.

Enfin l'invention concerne un ciment obtenu par les procédés du type précédent.

D'autres caractéristiques, détails et avantages de l'invention apparaîtront plus clairement à la lecture de la description qui va suivre et d'un exemple donné à titre non limitatif.

Les compositions ou les procédés selon l'invention comportent ou mettent en oeuvre, comme on l'a vu plus haut, au moins deux éléments qui vont maintenant être étudiés plus précisément. Pour tout le reste de la description, tout ce qui est décrit au sujet desdits éléments s'applique tant aux compositions qu'aux procédés qui utilisent ces éléments.

Ces compositions comprennent tout d'abord un ciment. Ce ciment est du type hydraulique, c'est-à-dire qu'il s'agit d'un matériau qui peut durcir en présence d'eau. Bien que tout type de ciment puisse être utilisé dans le cadre de la présente invention, quelques exemples vont être donnés ci-après.

Ce ciment peut tout d'abord être du type aluminate. On entend par là tout ciment contenant une proportion élevée soit d'alumine en tant que telle soit d'aluminate soit des deux. On peut citer à titre d'exemple les ciments à base d'aluminate de calcium, notamment ceux du type SECAR.

On peut aussi mentionner les ciments à base d'hémihydrate de sulfate de calcium ainsi que les ciments magnésiens dits ciments de Sorel.

Selon un mode de réalisation préféré de l'invention, le ciment peut aussi être du type silicate et plus particulièrement à base de silicate de calcium. On peut donner à titre d'exemple les ciment Portland et dans ce type de ciment les Portland à prise rapide ou très rapide, les ciments blancs, ceux résistant aux sulfates ainsi que ceux comprenant des laitiers de hauts-fourneaux et/ou des cendres volantes et/ou du méta-kaolin.

Les composition de l'invention comportent aussi un latex alcaligonflant.

Les latex sont des produits bien connus qui se présentent sous forme de suspensions aqueuses de polymères hydrocarbonés obtenus par des techniques de polymérisation en émulsion. Par latex alcaligonflant, on entend, selon l'invention, un latex gonflant aux alcalis (en particulier, soude, potasse, ammoniaque) contenus ou ajoutés dans l'émulsion aqueuse. Ce type de latex est aussi bien connu.

Les latex alcaligonflants contiennent généralement des polymères renfermant un ou plusieurs acides carboxyliques à insaturation éthylénique copolymérisés ou des esters alkyliques de ces acides.

Les acides carboxyliques à insaturation éthylénique sont généralement les acides à insaturation monoéthylénique et polyéthylénique contenant un ou plusieurs radicaux acides par molécule. Des exemples de ces acides sont l'acide acrylique, l'acide méthacrylique ou son dimère, l'acide fumarique, l'acide crotonique, l'acide itaconique, l'acide maléique. On inclut dans cette liste les esters alkyliques, inférieurs notamment, de ces acides et les dérivés à substituants alkyliques inférieurs et phényle de ces acides et esters.

Ces acides carboxyliques sont habituellement copolymérisés avec d'autres monomères non acides choisis dans le groupe comprenant les monomères dioléfiniques conjugués, notamment en C₄ à C₈ et les monomères à insaturation monoéthylénique dépourvus de groupe acide carboxylique ou ester.

Les dioléfines conjuguées sont habituellement celles du type du butadiène-1,3. Les monomères à insaturation monoéthylénique sont habituellement des composés aromatiques mononucléaires alcényliques ou des dérivés à substituant alkyle inférieur ou halogéno tel que le styrène, I'alphaméthylstyrène, I'alphachlorostyrène.

Un type plus particulier de latex alcaligonflant va être décrit ci-dessous.

Ce latex alcaligonflant est un copolymère :
- d'un monoester d'acide carboxylique à insaturation éthylénique ;
- d'un acide carboxylique à insaturation éthylénique ;
- d'au moins un monomère d'un troisième type choisi parmi les monomères vinylaromatiques et nitryle vinyliques ;
- d'un monomère comportant au moins deux insaturations éthyléniques.

Comme monoester d'acide carboxylique à insaturation éthylénique, on peut utiliser les acrylates, les méthacrylates, les fumarates et les maléates des alcools méthylique, éthylique, isopropionique, propionique, isobutylique, n-butylique, tert-butylique et éthyl-2 hexylique.

Comme acide carboxylique à insaturation éthylénique, on peut utiliser un acide ou un mélange des acides suivants : acide acrylique, acide méthacrylique ou son dimère, acide fumarique, acide crotonique, acide itaconique, acide maléique ainsi que les monoesters des acides ci-dessus avec des alcanols en C1-C8, tels que l'acrylate de méthyle, l'acrylate d'éthyle, l'acrylate de propyle, l'acrylate de n-butyle, l'acrylate d'éthyl-2 hexyle, le méthacrylate de méthyle, le méthacrylate d'éthyle et le méthacrylate de n-butyle.

On préfère l'acide acrylique et l'acide méthacrylique, l'acide itaconique, l'acide fumarique et l'acide maléique.

Le latex alcaligonflant comporte en outre un troisième monomère choisi parmi un monomère vinylaromatique tel que le styrène et le méthylstyrène et/ou un nitrile vinylique tel que l'acrylonitrile et le méthacrylonitrile.

Le latex alcaligonflant comporte également un monomère comportant au moins deux insaturations éthyléniques et jouant le rôle d'agent de réticulation incorporé lors de la polymérisation des monomères. Cet agent de réticulation peut être notamment choisi parmi le di(méth)acrylate d'éthylène glycol, le diacrylate de tripolypropylèneglycol, le tri(méth)acrylate de triméthylolpropane, le (méth)acrylate d'allyle, le diallylmaléate, le triallylcyanurate, le divinylbenzène et le méthylène-bis acrylamide.

Les agents de réticulation sont utilisés, de préférence à raison de 0,1 à 5 % et plus particulièrement de 0,2 à 1 % en poids par rapport au poids total de monomère, les agents réticulants préférés étant le diméthacrylate d'éthylèneglycol et le divinylbenzène.

D'une manière connue en soi, le pourcentage d'agent de réticulation est fixé en fonction plus particulièrement de la teneur en monomère carboxylé et du gonflement souhaité du latex.

A titre d'exemple de latex convenant plus particulièrement, on peut mentionner un copolymère comprenant 55 à 65 % en poids de monoester d'acide carboxylique insaturé, de préférence l'acrylate d'éthyle, 10 à 20 % en poids d'acide carboxylique insaturé, de préférence l'acide méthacrylique, 20 à 32 % en poids de styrène et 0,1 à 5 % en poids d'agent de réticulation.

Un mélange de monomères particulièrement adapté comporte 58 à 60 % en poids d'acrylate d'éthyle, 14 à 16 % en poids d'acide méthacrylique et 25 à 27 % en poids de styrène et 0,2 % à 1 % en poids d'agent de réticulation.

La polymérisation du latex alcaligonflant est réalisée, de manière connue en soi, en une ou plusieurs étapes.

Toutes les techniques classiques de polymérisation en dispersion peuvent être utilisées.

Ainsi, les monomères peuvent être préémulsionnés avec de l'eau en présence d'un agent émulsifiant anionique ou non ionique, dont on utilise habituellement environ 0,01 à 10 %, calculés sur la base du poids de monomères totaux. Un initiateur de polymérisation du type générateur de radicaux libres, tel que du persulfate d'ammonium ou de potassium, peut être utilisé seul ou en combinaison avec un accélérateur, tel que du métabisulfite de sodium ou du thiosulfate de sodium, du formaldéhyde sulphoxylate de sodium ainsi que des ions métalliques (fer, cobalt, cuivre...). Peuvent également être utilisés des générateurs de radicaux libres tels les azoïques (2,2' - azobisisobutyronitrile, 4,4' - azobis (4-cyanopentanoïque acide)...) ou les péroxydes tels l'eau oxygénée ou l'hydropéroxyde de tertiobutyle ou l'hydropéroxyde de cumène en association avec un réducteur.

L'initiateur et l'accélérateur, constituant conjointement ce qui est habituellement dénommé catalyseur, sont utilisables à raison de 0,1 à 2 % chacun sur la base du poids de monomères à copolymériser. La température de polymérisation peut être comprise entre 30 °C et 100 °C, plus favorablement entre 50 °C et 90 °C.

Comme exemples d'agents émulsifiants, on peut notamment citer des sels de métal alcalin et d'ammonium d'alkyl-, aryl-, alkylaryl et arylalkyl sulfonates et sulfates, ou de polyéther-sulfate ; les phosphates et phosphonates correspondants ; et des acides gras, esters, alcools, amides, amides et alkylphénols éthoxylés.

Il est également nécessaire de réticuler le polymère en cours de polymérisation. Pour cela, on incorpore en cours de polymérisation des agents réticulants qui sont des monomères ayant plusieurs, c'est-à-dire au moins 2 insaturations éthyléniques, en quantité allant de 0,1 à 5 %.

Des exemples de tels monomères comprennent le di(méth)acrylate d'éthylène glycol, le diacrylate de tripopylèneglycol, le tri(méth)acrylate de triméthylolpropane, le (méth)acrylate d'allyle, le diallylmaléate, le triallylcyanurate, le divinylbenzène, le méthylène-bis acrylamide.

Il est possible de polymériser un monomère ou une partie des monomères, dans une première étape, puis d'ajouter par la suite les autres monomères de manière à former des particules hétérogènes. C'est ainsi qu'une partie ou la totalité des monomères à base d'acide carboxylique peut être ajoutée en continu ou par fractions après le départ de la polymérisation afin d'assurer qu'une quantité suffisante de groupes acides se situe à la surface des particules de polymère formées au cours de la polymérisation.

Après polymérisation, le latex alcaligonflant peut être ajusté à un pH neutre ou légèrement acide compris entre 4 et 7 à l'aide d'une ou plusieurs bases telles que les hydroxydes alcalins, l'ammoniaque ou des amines organiques hydrosolubles comme la 2-amino 2-méthylpropanol, le diéthylaminoéthanol ou encore des ammoniums quaternaires comme l'hydroxyde de tétrabutylammonium.

Les proportions des différents éléments utilisés dans les compositions ou les procédés de l'invention peuvent varier. A titre d'exemple, on peut donner les proportions ci-dessous exprimées en partie en poids :
- ciment ciment : 100 ;
- latex alcaligonflant : au moins 2 et plus particulièrement de 5 à 11.

Des modes de réalisation plus particuliers de l'invention vont maintenant être décrits.

Tout d'abord, les compositions ou les procédés de l'invention peuvent en outre comprendre ou mettre en oeuvre un polymère hydrosoluble ou dispersible dans l'eau.

Il s'agit là de tout polymère ou copolymère organique du type décrit dans l'art antérieur au sujet des ciments MDF. Les polymères qui conviennent sont donc bien connus. On pourra notamment se référer au brevet US 4410366 ou à la demande de brevet européen 220073 dont les renseignements respectifs à ce sujet sont incorporés ici.

On pourra mentionner ici à titre d'exemples de polymères convenables les dérivés de la cellulose tels que les éthers de cellulose ou de carboxycellulose, les polysaccharides tels que guar et gommes xanthanes, les polyacrylamides, les polyesters, les polymères acryliques, les polymères maléiques, les acétates de polyvinyl partiellement hydrolysés, l'alcool polyvinylique, l'oxyde de polyéthylène, le polyvinyl pyrrolidone, les résines urée, époxy ou phénolformaldéhyde.

Plus particulièrement et dans le cas de l'utilisation d'un ciment PORTLAND notamment, on préfère utiliser les polymères comprenant au moins des fonctions carboxyles ou des groupements susceptibles de donner des fonctions carboxyles, ces polymères étant capables d'interagir avec des anions ou des cations libérés lors de l'hydratation du ciment. Des exemples de tels polymères sont les polyacrylamides ou des copolymères acétate de polyvinyle partiellement hydrolysé-acrylique.

Les proportions relatives de polymère hydrosoluble ou dispersible dans l'eau et du latex alcaligonflant pourront varier dans une large gamme en fonction des propriétés recherchées pour le ciment que l'on souhaite préparer.

Selon un autre mode de réalisation particulier, il est possible aussi d'utiliser dans le cadre de l'invention un élément choisi dans le groupe comprenant les silices fabriquées par voie humide, les silices de pyrogénation et les silicones.

Par silices obtenues par voie humide on entend ici les silices obtenues par précipitation à partir de la réaction d'un silicate alcalin avec un acide inorganique et donc les silices précipitées ou les gels de silices suivant le pH du milieu de précipitation, ce pH étant très acide pour les gels ; le mode de préparation de la silice peut être quelconque (addition d'acide sur un pied de cuve de silicate, addition simultanée totale ou partielle d'acide ou de silicate sur un pied de cuve d'eau ou de solution de silicate, etc....) et est choisi en fonction du type de silice que l'on souhaite obtenir. Entrent aussi dans cette même catégorie les silices hydrothermales obtenues par exemple par réaction d'une silice naturelle avec l'hydroxyde de calcium sous pression dans un autoclave puis traitement avec un acide tel que l'acide chlorhydrique.

Les silices de pyrogénation sont celles obtenues par hydrolyse du tétrachlorure de silicium dans la flamme. On peut citer la silice AEROSIL comme exemple de ce type de produit.

Parmi les silices précitées, on utilise préférentiellement une silice précipitée.

Il est possible d'utiliser des mélanges de silices décrites plus haut.

La silice sera choisie en fonction de sa bonne dispersibilité dans le mélange ciment, polymère et eau et aussi de sa réactivité.

Il est préférable d'utiliser des silices de surface spécifique BET d'au moins 20 m²/g et, plus particulièrement comprise entre 40 et 200 m²/g.

Les compositions de l'invention peuvent comporter un silicone.

Les silicones sont des composés comportant des enchaînements polysiloxaniques de type R₃SiO_{0,5} (motif M), R₂SiO (motif D), RSiO_{1,5} (motif T) et SiO₂ (motif Q).

Les radicaux R sont identiques ou différents et peuvent être choisis parmi les radicaux alkyles linéaires ou ramifiés, les radicaux vinyle, phényle, trifluoro-3,3,3 propyle.

De préférence, les radicaux alkyles présentent 1 à 6 atomes de carbone. On peut citer plus particulièrement comme radicaux R alkyles, les radicaux méthyle, éthyle, isopropyle, tertiobutyle et n-hexyle.

Dans le cadre de la présente invention, on peut citer plus particulièrement les huiles ou gommes silicones, c'est-à-dire les produits obtenus par polymérisation anionique ou cationique des cycliques Dₙ en présence de bloqueurs de chaîne M. On peut mentionner les huiles de formule générale MDₙM, les gommes polysiloxanes de masse moléculaire très élevée, de l'ordre par exemple de 500 000 ainsi que les huiles réactives, c'est-à-dire des hauts polymères dihydroxylés de forme HO-Dₙ-OH.

Selon un mode de réalisation particulier de l'invention, il est possible d'utiliser une silice du type de celles décrites ci-dessus, cette silice étant enrobée d'un silicone. Cet enrobage peut être obtenu par pulvérisation d'une huile silicone sur la silice à température ambiante ou à température plus élevée, par exemple vers 500 °C, ce par quoi on fait une chimiesorption du silicone sur la silice.

Les compositions et procédés de l'invention peuvent en outre comprendre et mettre en oeuvre un certain nombre d'additifs connus.

Comme additif on peut tout d'abord citer la fumée de silice, généralement condensée.

Comme autre type d'additifs, on peut mentionner les retardeurs de prise. Ceux-ci peuvent être choisis parmi les acides hydrocarboxyliques contenant du bore, l'acide phosphorique, le phosphate d'aluminium, le sulfate ferreux, le sulfate et le lignosulfate de sodium, le chlorure de zinc, I'acétate de cuivre, le gluconate de sodium, le sulfate acétate de sodium cellulose, le produit de réaction formaldéhyde-aminolignosulfate, le dialdéhyde amidon, la N,N-diméthyloldihydroxyethylène urée, les silicofluorures, le tall oil et le sucrose.

On peut citer aussi à titre d'additifs les fluidifiants comme par exemple le lignosulfonate de sodium et les condensés de naphtalène sulfonate.

L'utilisation et le choix des additifs se fera en fonction des propriétés mécaniques recherchées et de la nature des éléments mis en oeuvre.

Comme on l'a vu plus haut, l'invention concerne aussi le procédé de préparation d'un ciment sans macro-défauts.

Ce procédé peut être mis en oeuvre selon deux manières.

La première consiste à partir des compositions qui viennent d'être décrites. Dans ce cas, les éléments constitutifs de la compositions sont apportés ensemble simultanément.

La seconde manière consiste à utiliser les éléments décrits plus haut, ceux-ci étant cette fois apportés séparément.

Dans les deux cas, le procédé comprend une étape dans laquelle on mélange tout d'abord les éléments décrits plus haut avec de l'eau.

Le choix entre ces deux manières de procéder pourra se faire en fonction de la présentation des éléments précités. En effet, ces éléments peuvent se présenter soit sous forme solide soit sous forme liquide ou de suspension. Ce peut être le cas pour les latex et les polymères qui sons susceptibles de se présenter à l'état sec, solubilisable ou dispersible ou encore sous forme d'une suspension, d'une émulsion ou d'une solution aqueuse. Si l'ensemble des éléments polymère, silice de voie humide, silice de pyrogénation, silicone peuvent se présenter sous une forme n'apportant pas d'eau susceptible d'hydrolyser le ciment, on pourra former une composition du type de celles décrites plus haut et utiliser directement cette composition au moment de la préparation du ciment. Si au contraire, il est nécessaire ou préférable d'utiliser au moins un desdits éléments sous forme liquide avec présence d'eau, on procédera à la préparation du ciment par apport séparé des éléments.

Le mélange avec l'eau se fait dans des conditions cisaillantes par exemple dans un malaxeur. L'ordre d'introduction des éléments et de l'eau peut être quelconque. La quantité d'eau ajoutée est telle que l'on puisse obtenir une pâte plastique, homogène et malléable. Dans le cas particulier des ciments MDF, la quantité d'eau ajoutée ne dépasse pas 25 % en poids de la quantité de ciment et plus particulièrement 15 %, elle peut être comprise entre 15 et 9 %.

La pâte obtenue à l'issue du mélange subit ensuite un pressage à chaud. La pression utilisée dépend notamment du type de malaxeur employé et est habituellement comprise entre 10 et 1000 bars, par exemple de l'ordre de 300 bars et la température comprise entre 80 et 150 °C.

Après le pressage à chaud, il est possible de faire subir aussi au produit un ou plusieurs traitements thermiques. Ce type de traitement est connu en soi. Généralement, la température de traitement est comprise entre 60 et 100 °C et on travaille dans une atmosphère humide par exemple à ou aux environ de 95 % d'humidité relative.

On obtient à la fin des opérations décrites ci-dessus un ciment sans macro-défauts et présentant une porosité très faible. Ainsi généralement le ciment obtenu a une porosité d'au plus 0,1 cm³/g et présente des pores de diamètre maximum d'au plus 40 nm et plus particulièrement d'au plus 25 nm.

Ce ciment peut servir dans l'industrie du bâtiment et des travaux publics à la confection d'éléments de construction dont il constitue une base.

Un exemple concret mais non limitatif va maintenant être donné.

### EXEMPLE

### Préparation du latex :

On prépare le latex dans un réacteur en inox muni d'une double enveloppe et d'une agitation de type "impeller". Dans le réacteur à froid on charge les ingrédients suivants :
Eau : 164 parties en poids
Alkylbenzène sulfonate : 0,3 partie en poids

Cette solution d'émulsifiant est portée à 80 °C puis on introduit successivement :
Persulfate d'ammonium : 0,2 partie en poids
Eau : 1 partie en poids
puis un mélange monomère avec un débit constant sur une durée de 5 heures composé de :
acrylate d'éthyle : 59 parties en poids
styrène : 25,5 parties en poids
acide méthacrylique : 15 parties en poids
divinyl benzène : 0,5 partie en poids

Après 10 minutes d'introduction du mélange homogène on ajoute également une solution aqueuse sur une durée de 5h50 d'un mélange suivant :
Eau : 4 parties en poids
alkylaryléther sulfate d'ammonium : 1 partie en poids, à 25 molécules d'oxyde d'éthylène
persulfate d'ammonium : 0,2 partie en poids

La température du milieu réactionnel est maintenue constante à 80 °C pendant toute la durée de la polymérisation. Deux heures après la fin de l'introduction de la solution contenant le catalyseur ainsi que l'émulsifiant, ce latex est refroidi à température ambiante. Ses caractéristiques sont :
extrait sec = 40,2 %

A pH 2,3, la taille moyenne des particules de ce latex est de 60 nm (mesure par microscope électronique à transmission). Lorsque le pH varie de 2,3 à 10, la taille moyenne (mesurée par un Nano-Sizer de la Société Coulter) évolue de la façon suivante :

| | | | | | | | | | |
|---|---|---|---|---|---|---|---|---|---|
| **pH** | 2,3 | 4 | 5,6 | 6,4 | 7,2 | 8,2 | 8,5 | 9,2 | 10 |
| **taille (**µ**m)** | 68 | 69 | 77 | 82 | 93 | 112 | 132 | 170 | 175 |

### Préparation et test de la composition de ciment :

La composition testée est la suivante (le polymère étant soit le latex, soit, à titre d'échantillon témoin, le polyacrylamide de la société ALDRICH, référence 18127-7) :
ciment Portland : 100 parts
polymère : 7 parts
eau : 14 parts

Cette composition a été malaxée 15 minutes dans un malaxeur pour élastomère (BRADENBER), puis pressée à 300 bars et 120 °C pendant une heure dans un moule cylindrique de façon à former une plaquette de diamètre 7 cm, épaisseur 0,5 cm.

La plaquette est ensuite découpée en barrettes de dimensions approximatives 5x0,4x0,5 cm³, lesquelles sont ensuite testées en flexion trois points (entraxe 3 cm) 20 jours après leur fabrication (on sait en effet que la résistance à l'eau de ces composites évolue en fonction du temps). Pour la mesure de la résistance à l'eau, les éprouvettes sont immergées 24 heures dans de l'eau épurée puis testées immédiatement après. La reprise d'eau est l'augmentation de poids de la pièce (en % du poids initial) après cette immersion.

Le tableau suivant montre que le ciment obtenu en utilisant le latex alcaligonflant présente une densité supérieure et une reprise d'eau inférieure à celui obtenu à partir du polyacrylamide :

| Nature du polymère | Densité | Reprise d'eau (%) |
|---|---|---|
| Polyacrylamide | 2,3 | 10 |
| Latex alcaligonflant | 2,55 | 3,6 |

## Revendications

**1)** Composition pour ciment caractérisée en ce qu'elle comprend :
- un ciment ;
- un latex alcaligonflant.

**2)** Composition selon la revendication 1, caractérisée en ce qu'elle comprend un ciment du type silicate, plus particulièrement du type Portland.

**3)** Composition selon la revendication 1 ou 2, caractérisée en ce que le latex alcaligonflant est un copolymère :
- d'un monoester d'acide carboxylique à insaturation éthylénique ;
- d'un acide carboxylique à insaturation éthylénique ;
- d'au moins un monomère d'un troisième type choisi parmi les monomères vinylaromatiques et nitryle vinyliques ;
- d'un monomère comportant au moins deux insaturations éthyléniques.

**4)** Composition selon la revendication 3, caractérisée en ce que le latex alcaligonflant est un copolymère à base de 55 à 65 % de monoester d'acide carboxylique à insaturation éthylénique, 10 à 20 % d'acide carboxylique à insaturation éthylénique, 20 à 32 % de styrène et 0,1 à 5 % en poids d'un monomère comportant au moins deux insaturations éthyléniques.

**5)** Composition selon l'une quelconque des revendications précédentes, caractérisée en ce qu'elle comprend en outre un polymère hydrosoluble ou dispersible dans l'eau.

**6)** Composition selon l'une quelconque des revendications précédentes, caractérisée en ce qu'elle comprend en outre un élément choisi dans le groupe comprenant les silices fabriquées par voie humide, les silices de pyrogénation et les silicones.

**7)** Procédé de préparation d'un ciment, caractérisé en ce qu'il comprend une étape dans laquelle on mélange avec de l'eau un ciment et un latex alcaligonflant.

**8)** Procédé de préparation d'un ciment selon la revendication 7, caractérisé en ce qu'on utilise un latex qui est un copolymère :
- d'un monoester d'acide carboxylique à insaturation éthylénique ;
- d'un acide carboxylique à insaturation éthylénique ;
- d'au moins un monomère d'un troisième type choisi parmi les monomères vinylaromatiques et nitryle vinyliques ;
- d'un monomère comportant au moins deux insaturations éthyléniques.

**9)** Procédé de préparation d'un ciment selon la revendication 7 ou 8, caractérisé en ce qu'on mélange avec de l'eau outre un ciment et un latex alcaligonflant au moins un élément choisi dans le groupe comprenant les polymères hydrosolubles ou dispersibles dans l'eau, les silices fabriquées par voie humide, les silices de pyrogénation et les silicones.

**10)** Procédé de préparation d'un ciment, caractérisé en ce qu'il comprend une étape dans laquelle on mélange avec de l'eau les éléments constitutifs d'une composition selon l'une quelconque des revendications 1 à 6.

**11)** Ciment caractérisé en ce qu'il est obtenu par le procédé selon l'une des revendications 7 à 10.

**12)** Elément de construction caractérisé en ce qu'il est à base d'un ciment selon la revendication 11.
